# EUROPEAN PATENT APPLICATION

(11) **EP 4 036 711 A1**
(43) Date of publication of application: **03.08.2022**
(21) Application number: 21154446.5
(22) Date of filing: 29.01.2021
(51) Int. Cl.: G06F 8/36, G06F 8/38, G06N 5/04, G06F 9/451

(54) **VISUALIZATION SYSTEM BASED ON ARTIFICIAL INTELLIGENCE INFERENCE AND METHOD THEREOF**

(71) Applicant: Mitac Information Technology Corp., Taipei City 114 (TW)
(72) Inventor: Lee, Guan Yi, 114 Taipei City (TW); Chen, Hsi Yu, 114 Taipei City (TW)
(74) Representative: Lang, Christian

(57) **Abstract**

A visualization system based on artificial intelligence inference and a method thereof are disclosed. In the visualization system, a graphical user interface can provide a user to drag and select an image data set, to load and display the recommended template matching the selection result. The recommended template automatically specifies an Al model and a dashboard for the selected image data set, and after an inference calculation is performed, an inference result and a precision of the recommended template is displayed to be a basis of adjusting the recommended template, so as to achieve the technical effect of improving convenience in model selection and operation.

## Description

### BACKGROUND OF THE INVENTION

### 1. Field of the Invention

The present invention relates to a visualization system and a method thereof, and more particularly to a visualization system based on artificial intelligence inference and a method thereof.

### 2. Description of the Related Art

In recent years, with the popularization and rapid development of artificial intelligence (AI), various applications that combine artificial intelligence have sprung up. However, there are certain thresholds for using artificial intelligence, so how to use artificial intelligence more conveniently has become one of the problems that manufacturers urgently want to solve.

Generally speaking, the conventional method of using artificial intelligence requires the user to train the model first, and then store the trained model in the file directory of the inference system, and then the inference system selects the trained model for deployment of application programming interface (API) services. However, the conventional inference system does not have a visual interface part, the user must link the source data with the API service by a program and check the identification result on a graphical interface of the program. In other words, when the user wants to apply AI to a new situation, the user needs to re-train a new model, the conventional method does not permit the user to directly deploy the model by a dragging manner, and the user cannot quickly and intuitively view the recognition results and accuracy of the applied model. Therefore, the conventional method has a problem of insufficient convenience in model selection and operation.

According to above-mentioned contents, what is needed is to develop an improved technical solution to solve the conventional technical problem of insufficient convenience in model selection and operation.

### SUMMARY OF THE INVENTION

The present invention discloses a visualization system based on artificial intelligence inference. The visualization system includes a storage module, an initialization module, a loading module, an executing module and display module. The storage module is configured to store at least one recommended template, a plurality of image data sets from different sources, a plurality of AI models trained with different identification algorithms, and a plurality of dashboards. The at least one recommended template comprises specified at least one of the plurality of image data sets, specified at least one of the plurality of AI models and specified at least one of the plurality of dashboards. The initialization module is connected to the storage module and configured to, in initial, generate a graphical user interface (GUI) to display the plurality of image data sets, and permit to drag and drop the displayed image data set to a candidate block of the graphical user interface as a dragged unit. The loading module is connected to the storage module and the initialization module configured to select one, which comprises the dragged unit, of the at least one recommended template, and load the specified image data set, the specified AI model and the specified dashboard comprised in the selected recommended template. The executing module is connected to the loading module and configured to when an execution command is triggered, input the loaded image data set to the loaded AI model to perform an inference calculation, and generate an inference result based on the inference calculation, and detect whether the selected recommended template has a precision. When the selected recommended template has a precision, the executing module directly load the precision, and when the selected recommended template does not have the precision, the executing module calculates the precision corresponding to the inference result, and set the calculated precision as the precision of the selected recommended template. The display module is connected to the loading module and the executing module, and configured to use the loaded dashboard to display the inference result and the precision, which is directly loaded or calculated, on the GUI.

Furthermore, the present invention discloses a visualization method based on artificial intelligence inference, and the visualization method including following steps of: providing at least one recommended template, a plurality of image data sets from different sources, a plurality of AI models trained with different identification algorithms, and a plurality of dashboards, wherein the at least one recommended template comprises specified at least one of the plurality of image data sets, specified at least one of the plurality of AI models and specified at least one of the plurality of dashboards; in initial, generating a graphical user interface to display the plurality of image data sets, and permitting to drag and drop one of the plurality of displayed image data sets to a candidate block of the graphical user interface as a dragged unit; selecting one, comprising the dragged unit, of the at least one recommended template, and loading the specified image data set, the specified AI model and the specified dashboard of the selected recommended template; when an execution command is triggered, inputting the loaded image data set into the loaded AI model to perform an inference calculation, and generating an inference result based on the inference calculation; detecting whether the selected recommended template has a precision, and when the selected recommended template has the precision, directly loading the precision, and when the selected recommended template does not have the precision, calculating the precision corresponding to the inference result, and setting the calculated precision as the precision of the selected recommended template; using the loaded dashboard to display the inference result and the precision, which is directly loaded or calculated, on the graphical user interface.

According to above-mentioned system and method of the present invention, the difference between the system and method of the present invention and the conventional technology is that in the system and method of the present invention the GUI can provide a user to drag and select the image data set, and load and display the recommended template matching the selection result, the recommended template automatically specifies the AI model and the dashboard for the selected image data set, and after the inference calculation is performed, the inference result and the precision of the recommended template are displayed as the basis of adjusting the recommended template.

The aforementioned technical solution of the present invention can achieve the technical effect of improving convenience in model selection and operation.

### BRIEF DESCRIPTION OF THE DRAWINGS

The structure, operating principle and effects of the present invention will be described in detail by way of various embodiments which are illustrated in the accompanying drawings.
FIG. 1 is a system block diagram of a visualization system based on artificial intelligence inference, according to the present invention.
FIGS. 2A and 2B are flowcharts of a visualization method based on artificial intelligence inference, according to the present invention.
FIG. 3 is a system block diagram of a visualization system based on artificial intelligence inference, according to another embodiment of the present invention.
FIGS. 4A and 4B are schematic views showing an operation of displaying a recommended template of the present invention.
FIGS. 5A and 5B are schematic views showing an operation of creating a new recommended template, according to the present invention.

### DETAILED DESCRIPTION OF THE PREFERRED EMBODIMENTS

The following embodiments of the present invention are herein described in detail with reference to the accompanying drawings. These drawings show specific examples of the embodiments of the present invention. These embodiments are provided so that this disclosure will be thorough and complete, and will fully convey the scope of the invention to those skilled in the art. It is to be acknowledged that these embodiments are exemplary implementations and are not to be construed as limiting the scope of the present invention in any way. Further modifications to the disclosed embodiments, as well as other embodiments, are also included within the scope of the appended claims.

These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts. As used herein, the singular forms "a", "an" and "the" are intended to include the plural forms as well, unless the context clearly indicates otherwise. As used herein, the term "or" includes any and all combinations of one or more of the associated listed items.

It will be acknowledged that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the words "comprise" and "include", and variations such as "comprises", "comprising", "includes", or "including", will be acknowledged to imply the inclusion of stated elements but not the exclusion of any other elements.

The environment where the present invention is applied is described before illustration of the visualization system based on artificial intelligence inference and a method thereof. The present invention applies a GUI to permit a user to drag and drop image data sets from different sources, for example, images of traffic flow, images of parts or images of the defect parts, and also permit the user to select the image data set from different sources at the same time, for example, the user can select the images of parts and the images of the defect parts at the same time, so that the suitable one of the recommended templates can be automatically loaded according to the selected image data sets, and the AI model appropriate for the image data sets can be used. As a result, the present invention can improve convenience in AI model selection and operation.

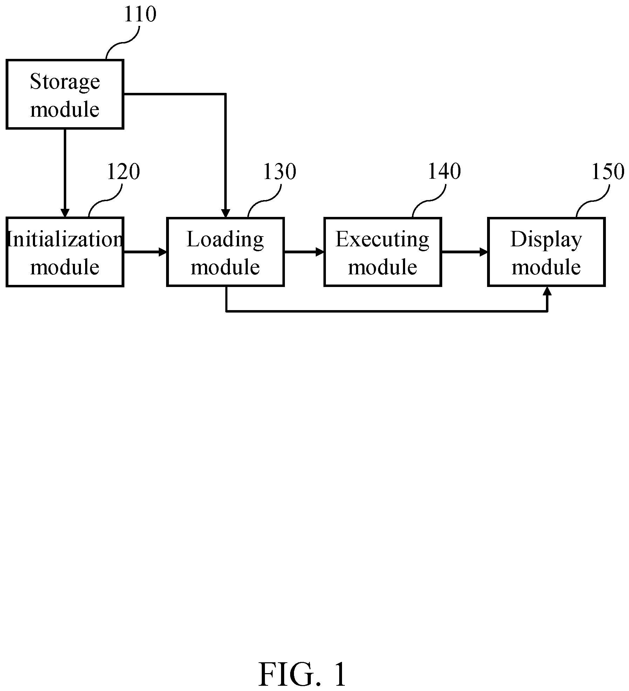

The visualization system based on artificial intelligence inference and a method thereof of the present invention will hereinafter be described in more detail with reference to the accompanying drawings. Please refer to FIG. 1, which is a system block diagram of a visualization system based on artificial intelligence inference, according to the present invention. As show in FIG. 1, the application system includes a storage module 110, an initialization module 120, a loading module 130, an executing module 140 and a display module 150. The storage module 110 is configured to store recommended templates, image data sets from different sources, AI models trained with different identification algorithms, and dashboards. Each of the recommended templates includes a specified image data set, a specified AI model, and a specified dashboard, such as a bar chart, a pie chart or a radar chart. In actual implementation, the storage module 110 can be implemented by a hard disk, an optical disk, or nonvolatile memory. Furthermore, the image data sets include image streaming data or defect image data from different image capture devices, for example, the image streaming data can be images of traffic flow or parts, and defect image data can be images of protruding points, pits, or eccentric holes. The AI model can be a model trained with different identification algorithm, such as YOLO, Fast R-CNN, Mask R-CNN or other similar algorithm.

The initialization module 120 is connected to the storage module 110, and configured to in initial, generate a graphical user interface (GUI) to display the image data sets, and permit to drag and drop the displayed image data sets to a candidate block of the GUI as a dragged unit. In actual implementation, displaying the image data sets on the GUI is performed by image blocks, and different image blocks represent different image data sets, respectively. The user can use a cursor to drag and drop the image block representing for the selected image data set, to achieve the purpose of selecting the image data set, and the image block dragged to the candidate block is used as the dragged unit. Furthermore, a data link relationship between the image data set and the AI model in the candidate block is permitted to re-adjust by a dragging-and-dropping manner, and the inference calculation is performed again based on the re-adjusted data link relationship.

**The** loading module 130 is connected to the storage module 110 and the initialization module 120 and configured to screen out and select the recommended template which includes the dragged unit, and then load the specified image data set, the AI model and the dashboard of the selected recommended template based on the selected recommended template. For example, suppose that a recommended template includes the specified image data set being part A, the AI model being YOLO, the dashboard being a bar chart, when the image data set represented by the dragged unit is also images of part A, the recommended template is selected to load because of including the image data set being the part A.

**The** executing module 140 is connected to the loading module 130, and when an execution command is triggered, the executing module 140 is configured to input the loaded image data set to the loaded AI model, so that inference calculation is performed and an inference result is generated based on the inference calculation. The executing module 140 also detects whether the selected recommended template has a precision, if the selected recommended template has the precision, the precision is directly loaded; otherwise, the precision corresponding to the inference result is calculated, and the calculated precision is set as the precision of the selected recommended template. In actual implementation, an image block or graphical button can be generated on the GUI for the user to click, and when the image block or the graphical button is clicked, the execution command is triggered to perform evaluation and inference. Furthermore, the calculation of the precision of the recommended template can be implemented by using confusion matrix or other similar performance measure index, and even the calculation result can be stored as the history record corresponding to the recommended template. Furthermore, when the precision is lower than a preset value, the corresponding recommended template can be loaded to display the specified image data set, the specified AI model and the specified dashboard thereof in the candidate block as the dragged units, and the user is permitted to add, delete or adjust the dragged units.

**The** display module 150 is connected to the loading module 130 and the executing module 140, and configured to use the loaded dashboard to display the inference result and the precision, which is directly loaded or calculated, on the GUI together. For example, in a condition that the dashboard is a bar chart, the inference result and the precision can be digitized and then expressed in a form of the bar chart. In actual implementation, the dashboard can display various messages in a dashboard at the same time.

It is to be noted that it is to be particularly noted that, in actual implementation, the modules of the present invention can be implemented by various manners, including software, hardware or any combination thereof, for example, in an embodiment, the module can be implemented by software and hardware, or one of software and hardware. Furthermore, the present invention can be implemented fully or partly based on hardware, for example, one or more module of the system can be implemented by integrated circuit chip, system on chip (SOC), a complex programmable logic device (CPLD), or a field programmable gate array (FPGA). The concept of the present invention can be implemented by a system, a method and/or a computer program. The computer program can include computer-readable storage medium which records computer readable program instructions, and the processor can execute the computer readable program instructions to implement concepts of the present invention. The computer-readable storage medium can be a tangible apparatus for holding and storing the instructions executable of an instruction executing apparatus. The computer-readable storage medium can be, but not limited to electronic storage apparatus, magnetic storage apparatus, optical storage apparatus, electromagnetic storage apparatus, semiconductor storage apparatus, or any appropriate combination thereof. More particularly, the computer-readable storage medium can include a hard disk, a RAM memory, a read-only-memory, a flash memory, an optical disk, a floppy disc or any appropriate combination thereof, but this exemplary list is not an exhaustive list. The computer-readable storage medium is not interpreted as the instantaneous signal such as a radio wave or other freely propagating electromagnetic wave, or electromagnetic wave propagated through waveguide, or other transmission medium (such as optical signal transmitted through fiber cable) or electric signal transmitted through electric wire. Furthermore, the computer readable program instruction can be downloaded from the computer-readable storage medium to each calculating/processing apparatus, or downloaded through network, such as internet network, local area network, wide area network and/or wireless network, to external computer equipment or external storage apparatus. The network includes copper transmission cable, fiber transmission, wireless transmission, router, firewall, switch, hub and/or gateway. The network card or network interface of each calculating/processing apparatus can receive the computer readable program instructions from network, and forward the computer readable program instruction to store in computer-readable storage medium of each calculating/processing apparatus. The computer program instructions for executing the operation of the present invention can include source codes or object code programmed by assembly language instructions, instruction-set-structure instructions, machine instructions, machine-related instructions, micro instructions, firmware instructions or any combination of one or more programming language. The programming language include object oriented programming language, such as Common Lisp, Python, C++, Objective-C, Smalltalk, Delphi, Java, Swift, C#, Perl, Ruby, and PHP, or regular procedural programming language such as C language or similar programming language. The computer readable program instruction can be fully or partially executed in a computer, or executed as independent software, or partially executed in the client-end computer and partially executed in a remote computer, or fully executed in a remote computer or a server.

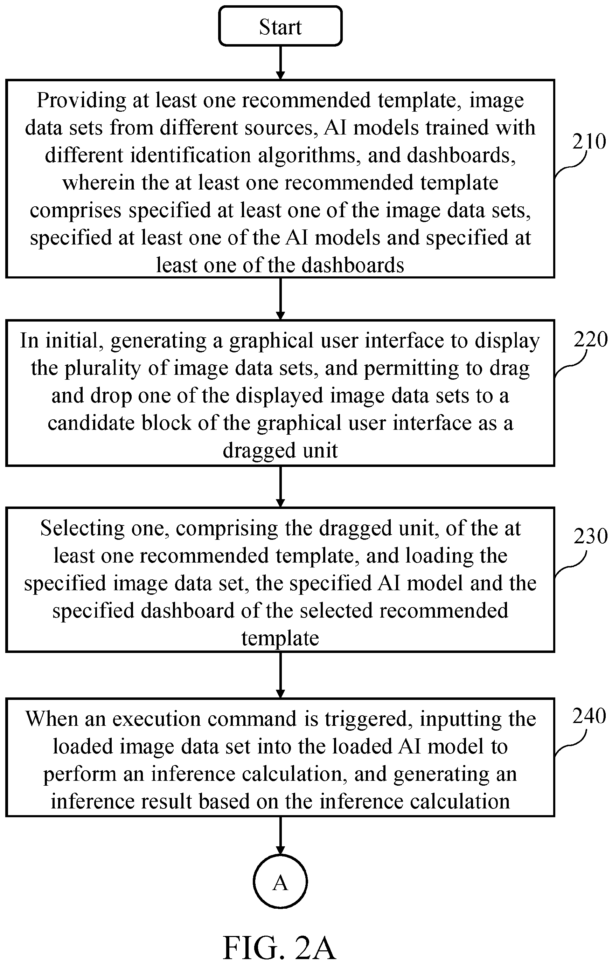

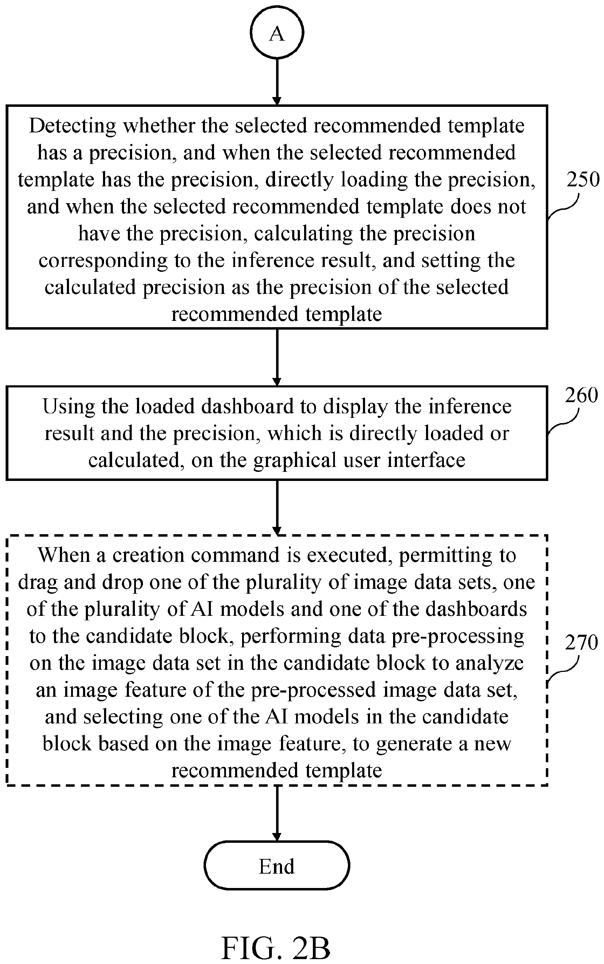

Please refer to FIGS. 2A and 2B, which are flowcharts of a visualization method based on artificial intelligence inference, according to the present invention. As shown in FIGS. 2A and 2B, the visualization method includes following steps. In a step 210, a plurality of recommended templates, a plurality of image data sets from different sources, a plurality of AI models trained with different identification algorithms, and a plurality of dashboards are provided, and each recommended template includes the specified image data set, the specified AI model and the specified dashboard. In a step 220, in initial, a graphical user interface (GUI) is generated to display the plurality of image data sets, and the displayed image data set is permitted to drag and drop to a candidate block of the GUI as a dragged unit. In a step 230, the recommended template including the dragged unit is screened out and selected, and the specified image data set, the specified AI model and the specified dashboard of the selected recommended template is loaded. In a step 240, when an execution command is triggered, the loaded image data set is inputted to the loaded AI model for performing an inference calculation, so as to generate an inference result based on the inference calculation. In a step 250, the selected recommended template is detected to check whether the selected recommended template has a precision, and when the selected recommended template has a precision, the precision is directly load; otherwise, the precision corresponding to the inference result is calculated and the calculated precision is set as the precision of the selected recommended template. In a step 260, the loaded dashboard is used to display the inference result and the precision, which is directly loaded or calculated, on the GUI together. Through aforementioned steps, the GUI can provide a user to drag and select the image data set, the recommended template matching the selection result is loaded and displayed, and the recommended template automatically specifies the AI model and the dashboard for the selected image data set, and after the inference calculation is performed, the inference result and the precision of the recommended template are displayed as the basis of adjusting the recommended template.

In an embodiment, a step 270 can be performed after the step 260. When a creation command is executed, the image data sets, the AI models and the dashboards are permitted to drag and drop to the candidate block, the data pre-processing is then performed on the image data set, and image features of the pre-processed image data set are analyzed, so that the AI model can be selected to be the new recommended template based on the image features. The data pre-processing can improve the identification speed and the precision, to facilitate to select the appropriate AI model based on the image content.

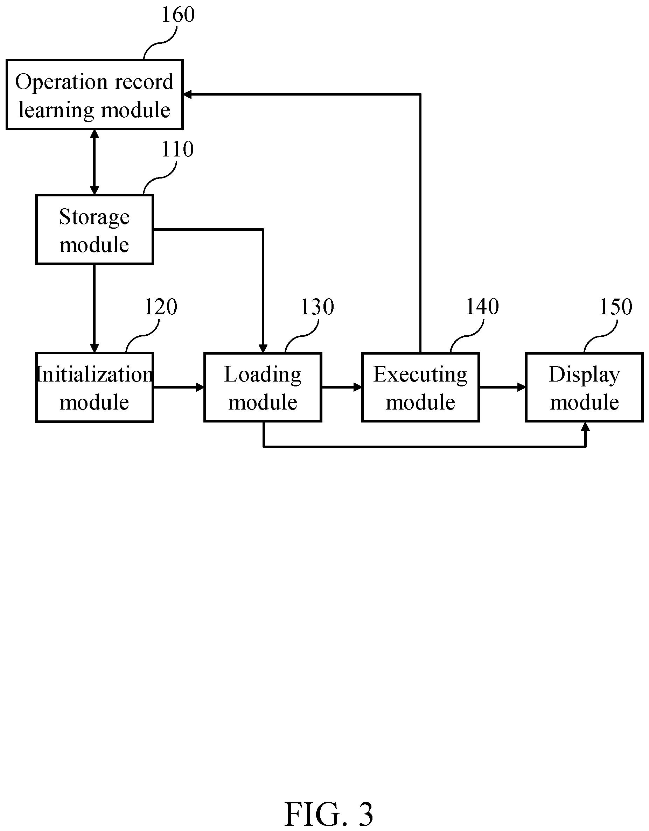

**The** embodiment of the present invention will be described in following paragraphs with reference to FIGS. 3 to 5B. Please refer to FIG. 3, which is a system block diagram of visualization system, according to another embodiment the present invention. In actual implementation, the difference between the embodiment of FIG. 3 and the embodiment of FIG. 1 is that the embodiment of FIG. 3 additionally includes an operation record learning module 160 connected to the storage module 110 and the executing module 140, and the operation record learning module 160 is configured to store a history record corresponding to the recommended template, the history record is generated by the inference calculation performed by the executing module 140, and the history record includes an identification speed and a precision of the AI model in identification of the image data set, and the specified AI model in the recommended template is permitted to adjust based on the image data set, the identification speed, and the precision. For example, for different image data set, a user can select the AI model with highest identification speed and the highest precision, or the AI model with the highest identification speed but normal precision, or the AI model with high precision but slow identification speed, or the AI model with normal identification speed and normal precision. Next, the adjustment result is displayed on the GUI in a form of, for example, dialog window or pop-up window. In actual implementation, besides the identification speed and the precision, the history record can include other evaluation index such as a mAP, and the difference between mAP and the average precision (AP) is that the mAP is an average of AP of all objects.

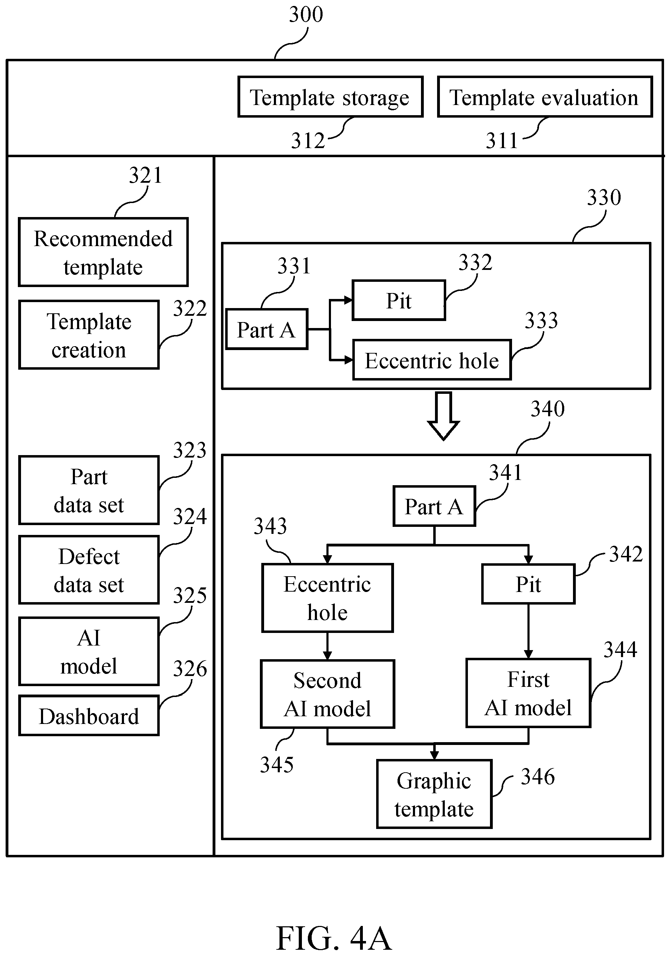

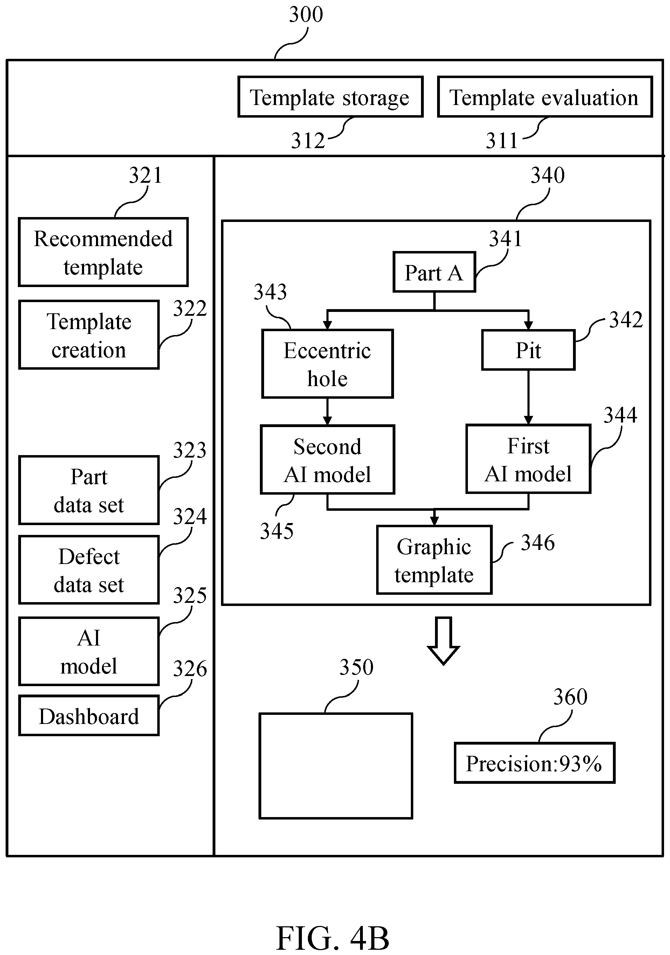

Please refer to FIGS. 4A and 4B, which are schematic views showing an operation of displaying a recommended template of the present invention. In an automated optical inspection (AOI) scenario, the image data set can include images of parts and images of defects. In order to use the recommended template, the user can click, in sequential order, the recommended template component 321, the part data set component 323 and the defect data set component 324, so that the image data set is displayed in the GUI 300 for providing the user to select, shown in FIG. 4A. The user is permitted to drag and drop the displayed image data sets, such as an image data set of the part A, an image data set of pit, and an image data set of eccentric hole, to the candidate block 330 of the GUI 300 as the dragged units 331-333, so that the recommended template including the dragged units 331-333 can be screened out and selected, and the specified image data set, the specified AI model and the specified dashboard of the selected recommended template are displayed in the display block 340 with different image units 341-346, respectively. When the user wants to evaluate the quality of the selected recommended template, the user can click the template evaluation component 311 to trigger the execution command, the loaded image data set is then inputted to the loaded AI model to perform an inference calculation, and an inference result is generated based on the inference calculation. Next, the selected recommended template is detected to check whether the selected recommended template has a precision, and when the selected recommended template has a precision, the precision is directly loaded; otherwise, the precision corresponding to the inference result is calculated and the calculated precision is set as the precision of the selected recommended template. As shown in FIG. 4B, the loaded dashboard is used to display the inference result, the precision which is directly loaded or calculated, in the inference result display block 350 and the precision display block 360 of the GUI 300 together. It is to further explain that the user can click the part data set component 323, the defect data set component 324, the AI model component 325 and the dashboard component 326 to adjust the different image data set, AI model and dashboard.

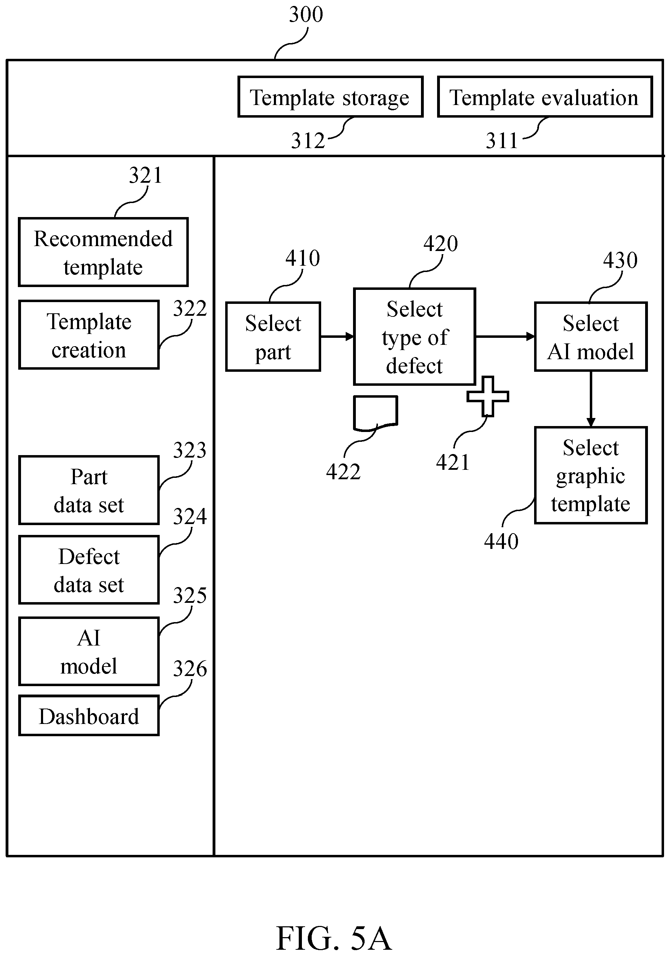

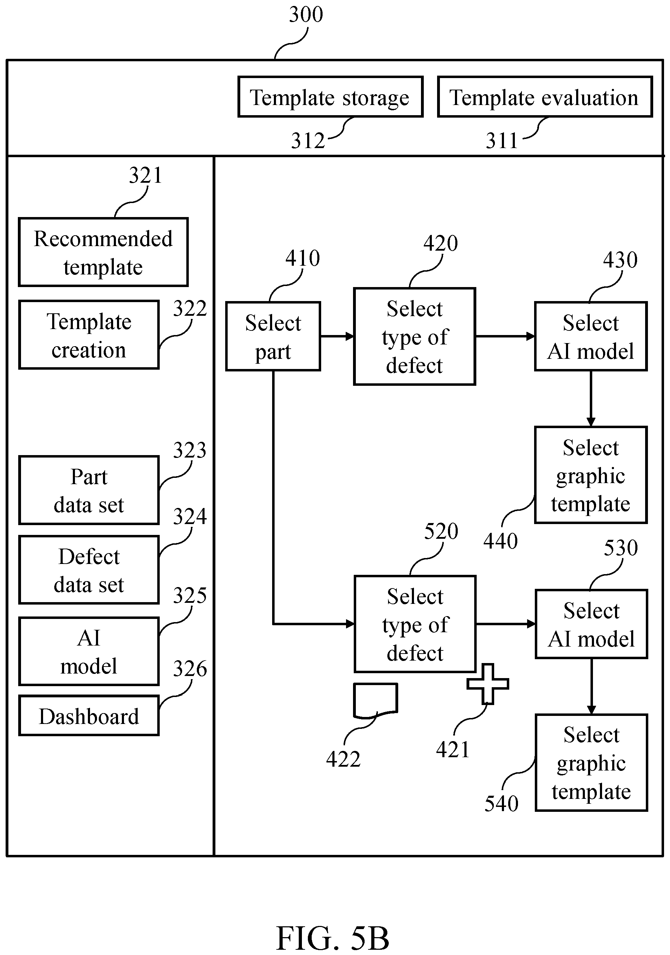

Please refer to FIGS. 5A and 5B, which are schematic views showing an operation of creating a new recommended template, according to the present invention. In order to create a new recommended template, a user can click a template creation component 322 to trigger a creation command, to generate a plurality of selection blocks 410, 420, 430 and 440. After clicking the part data set component 323, the user can select an image data set, such as the data set of the part images, and drag the selected image data set to the selection block 410. After clicking the defect data set component 324, the user can select an image data set, such as the data set of protruding point defect images, and drag and drop the selected image data set to the selection block 420. After clicking the AI model component 325, the user can select an AI model, such as the model using YOLO algorithm, and drag the selected AI model to the selection block 430. After clicking the dashboard component 326, the user can select a dashboard, such as a bar chart, a pie chart or a line chart. After all selection operations are completed, the user can click the template storage component 312, and store the above-mentioned selections as a new recommended template. It is to be noted that each of the selection blocks 410, 420, 430 and 440 has an adding component 421 and a setting component 422, and the user can click the adding component 421 to add another image data set, AI model and dashboard, and the user can click the setting component 422 to change parameter. For example, when the user clicks the adding component 421, another branch with a selection blocks 520, 530 and 540, and an adding component 521 and a setting component 522 is displayed, as shown in FIG. 5B.

According to above-mentioned contents, the difference between the present invention and conventional technology is that in the system and method of the present invention the GUI can provide a user to drag and select the image data set, and load and display the recommended template matching the selection result, the recommended template automatically specifies the AI model and the dashboard for the selected image data set, and after the inference calculation is performed, the inference result and the precision of the recommended template are displayed as the basis of adjusting the recommended template. Therefore, the aforementioned technical solution of the present invention can solve the conventional technical problems, so as to achieve the technical effect of improving convenience in model selection and operation.

The present invention disclosed herein has been described by means of specific embodiments. However, numerous modifications, variations and enhancements can be made thereto by those skilled in the art without departing from the spirit and scope of the disclosure set forth in the claims.

## Claims

1. A visualization system based on artificial intelligence inference, comprising
a storage module configured to store at least one recommended template, a plurality of image data sets from different sources, a plurality of AI models trained with different identification algorithms, and a plurality of dashboards, wherein the at least one recommended template comprises specified at least one of the plurality of image data sets, specified at least one of the plurality of AI models and specified at least one of the plurality of dashboards;
an initialization module connected to the storage module and configured to, in initial, generate a graphical user interface (GUI) to display the plurality of image data sets, and permit to drag and drop the displayed image data set to a candidate block of the graphical user interface as a dragged unit;
a loading module connected to the storage module and the initialization module configured to select one, which comprises the dragged unit, of the at least one recommended template, and load the specified image data set, the specified AI model and the specified dashboard comprised in the selected recommended template;
an executing module connected to the loading module and configured to when an execution command is triggered, input the loaded image data set to the loaded AI model to perform an inference calculation, and generate an inference result based on the inference calculation, and detect whether the selected recommended template has a precision, wherein when the selected recommended template has the precision, the executing module directly load the precision, and when the selected recommended template does not have the precision, the executing module calculates the precision corresponding to the inference result, and set the calculated precision as the precision of the selected recommended template; and
a display module connected to the loading module and the executing module, and configured to use the loaded dashboard to display the inference result and the precision, which is directly loaded or calculated, on the GUI.

2. The visualization system based on artificial intelligence inference according to claim 1, further comprising an operation record learning module connected to the storage module and the executing module, wherein the operation record learning module is configured to store a history record corresponding to the at least one recommended template, the history record comprises an identification speed and the precision of the specified AI model in identification of the specified image data set, and the specified AI model of the at least one recommended template is permitted to adjust based on the specified image data set, the identification speed and the precision, and an adjustment result is displayed on the GUI.

3. The visualization system based on artificial intelligence inference according to claim 1, wherein a data link relationship between the specified image data set and the specified AI model in the candidate block is permitted to re-adjust by a dragging-and-dropping manner, and the inference calculation is performed again based on the adjusted data link relationship.

4. The visualization system based on artificial intelligence inference according to claim 1, wherein when the executing module performs a creation command, one of the plurality of image data sets, one of the plurality of AI models and one of the plurality of dashboards are permitted to drag and drop to the candidate block, data pre-processing is performed on the image data set in the candidate block to analyze an image feature of the pre-processed image data set, and the AI models within the candidate block is selected to generate a new recommended template according to the image feature.

5. The visualization system based on artificial intelligence inference according to claim 1, wherein when the precision is lower than a preset value, the corresponding recommended template is loaded to display the specified image data set, the specified AI model and the specified dashboard of the recommended template on the candidate block as the dragged unit, and the dragged unit is permitted to add, delete or adjust.

6. A visualization method based on artificial intelligence inference, comprising:
providing at least one recommended template, a plurality of image data sets from different sources, a plurality of AI models trained with different identification algorithms, and a plurality of dashboards, wherein the at least one recommended template comprises specified at least one of the plurality of image data sets, specified at least one of the plurality of AI models and specified at least one of the plurality of dashboards;
in initial, generating a graphical user interface to display the plurality of image data sets, and permitting to drag and drop one of the plurality of displayed image data sets to a candidate block of the graphical user interface as a dragged unit;
selecting one, comprising the dragged unit, of the at least one recommended template, and loading the specified image data set, the specified AI model and the specified dashboard of the selected recommended template;
when an execution command is triggered, inputting the loaded image data set into the loaded AI model to perform an inference calculation, and generating an inference result based on the inference calculation;
detecting whether the selected recommended template has a precision, and when the selected recommended template has the precision, directly loading the precision, and when the selected recommended template does not have the precision, calculating the precision corresponding to the inference result, and setting the calculated precision as the precision of the selected recommended template; and
using the loaded dashboard to display the inference result and the precision, which is directly loaded or calculated, on the graphical user interface.

7. The visualization method based on artificial intelligence inference according to claim 6, wherein the at least one recommended template comprises a history record, the history record comprises an identification speed and the precision of the specified AI model in identification of the specified image data set, and the specified AI model of the at least one recommended template is permitted to adjust based on the specified image data set, the identification speed and the precision, and an adjustment result is displayed on the graphical user interface.

8. The visualization method based on artificial intelligence inference according to claim 6, wherein a data link relationship between the image data set and the AI model in the candidate block is permitted to re-adjust by a dragging-and-dropping manner, and the inference calculation is performed again based on the adjusted data link relationship.

9. The visualization method based on artificial intelligence inference according to claim 6, further comprising:
when a creation command is executed, permitting to drag and drop one of the plurality of image data sets, one of the plurality of AI models and one of the plurality of dashboards to the candidate block, performing data pre-processing on the image data set in the candidate block to analyze an image feature of the pre-processed image data set, and selecting one of the AI models in the candidate block based on the image feature, to generate a new recommended template.

10. The visualization method based on artificial intelligence inference according to claim 6, wherein when the precision is lower than a preset value, loading the corresponding recommended template, displaying the specified image data set, the specified AI model and the specified dashboard of the loaded recommended template on the candidate block as the dragged units, and permitting to add, delete or adjust the dragged units.
